# EUROPÄISCHE PATENTSCHRIFT

(11) **EP 2 892 661 B1**
(45) Veröffentlichungstag und Bekanntmachung des Hinweises auf die Patenterteilung: **30.11.2016**
(21) Anmeldenummer: 13766890.1
(22) Anmeldetag: 09.09.2013
(51) Int. Cl.: B07C 5/02, B65G 47/14, B29C 49/42, B29C 49/02, B29C 49/06

(54) **VEREINZELUNGSVORRICHTUNG FÜR VORFORMLINGE**
SEPARATION DEVICE FOR PREFORMS
DISPOSITIF DE SÉPARATION POUR PRÉFORMES

(30) Priorität: 07.09.2012 DE 102012017699
(43) Veröffentlichungstag der Anmeldung: 15.07.2015
(73) Patentinhaber: KHS Corpoplast GmbH, 22145 Hamburg (DE)
(72) Erfinder: HELLER, Alexander, 22941 Bargteheide (DE); HOLLER, Dieter, 23843 Rümpel (DE)
(74) Vertreter: Hausfeld, Norbert
(86) Internationale Anmeldenummer: PCT/EP2013/002695
(87) Internationale Veröffentlichungsnummer: WO 2014/037120

(56) Entgegenhaltungen:
- EP-A1- 2 065 320
- EP-A1- 2 554 356
- WO-A1-2010/006461
- DE-A1-102011 016 858

## Beschreibung

Die vorliegende Erfindung betrifft eine Vereinzelungsvorrichtung für Vorformlinge. Solche Vereinzelungsvorrichtungen werden auf dem technischen Gebiet des Transportes von Vorformlingen zu einer Maschine zur Herstellung von Behältern aus einem thermoplastischen Material benötigt, wobei die Behälterformung durch Blasdruckeinwirkung erfolgt.

Bei der Behälterformung durch Blasdruckeinwirkung werden Vorformlinge aus einem thermoplastischen Material, beispielsweise Vorformlinge aus PET (Polyethylenterephthalat), innerhalb einer Blasmaschine unterschiedlichen Bearbeitungsstationen zugeführt. Typischerweise weist eine derartige Blasmaschine eine Heizeinrichtung zur thermischen Konditionierung der Vorformlinge sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf bei einer derartigen Expansion des Vorformlings wird in der DE-OS 43 40 291 erläutert. Der grundsätzliche Aufbau einer Blasstation zur Behälterformung wird in der DE-OS 42 12 583 beschrieben. Möglichkeiten zur Temperierung der Vorformlinge werden in der DE-OS 23 52 926 erläutert. Auf den Inhalt dieser Dokumente wird Bezug genommen.

Die Blasmaschine muss kontinuierlich mit Vorformlingen beschickt werden, um einen unterbrechungsfreien Blasmaschinenlauf zu ermöglichen. Dies gilt sowohl für lineare Blasmaschinen als auch für solche nach dem Rundläuferprinzip. Für die Bereitstellung der Vorformlinge für die Blasmaschine gibt es dabei zwei Alternativen. Bei dem sogenannten Einstufenverfahren werden die Vorformlinge in einem Spritzgussverfahren hergestellt und unmittelbar nach ihrer spritzgusstechnischen Herstellung (und nach einer ausreichenden Verfestigung) über eine Transportvorrichtung direkt zur Blasmaschine transportiert. Bei dem sogenannten Zweistufenverfahren werden die Vorformlinge zunächst in einem Spritzgussverfahren gefertigt, anschließend zwischengelagert und erst zu einem späteren Zeitpunkt hinsichtlich ihrer Temperatur konditioniert und zu einem Behälter geblasen. Die Herstellung der Vorformlinge und das Aufblasen der Vorformlinge zu Behältern können dadurch zu verschiedenen Zeiten an verschiedenen Orten stattfinden.

Beide Verfahren haben gemein, dass die Vorformlinge über eine Transportvorrichtung der Blasmaschine zugeführt werden. Bekannte Vorrichtungen bestehen z.B. aus einem Steigförderer, über den die in einem Sammelbehälter gelagerten Vorformlinge zu einer Fördereinrichtung transportiert werden. Über die Fördereinrichtung, in der Regel ein Förderband, werden die Vorformlinge zu einer Vereinzelungsvorrichtung transportiert. Diese Vereinzelungsvorrichtung hat die Aufgabe, die Vorformlinge in eine definierte Position auszurichten und zu vereinzeln, um eine geeignete Übergabe z.B. an eine nachgeschaltete Blasmaschine zu ermöglichen. Bekannte Vereinzelungsvorrichtungen (sogenannte Rollensortierer) bestehen z.B. aus zwei Förderrollen, die sich in entgegengesetzter Richtung drehen und zwischen denen ein schmaler Spalt verbleibt, der so gewählt ist, dass die Vorformlinge an ihrem Kragen hängend zwischen den drehenden Förderrollen gehalten werden können. Dabei sind die Förderrollen mit einem Gefälle angeordnet, so dass die Vorformlinge in Richtung des Gefälles an den Förderrollen entlang gleiten. Auf diese Weise werden die Vorformlinge zwischen den rotierenden Rollen hängend sortiert, vereinzelt und aufgrund des Gefälles auch gefördert.

Es ist bekannt, dass Vorformlinge ausgesondert werden, die sich nicht korrekt einsortieren und z.B. statt zwischen den Förderrollen zu hängen auf den Förderrollen liegend ausgerichtet sind. Solche Aussondereinrichtungen sind z.B. aus der WO 2011/069268 A1 bekannt. Dort erfolgt die Aussonderung über einen auf die fehlorientierten Vorformlinge einwirkenden Luftstoß. In diesem Dokument werden weitere Aussondereinrichtungen aus dem Stand der Technik angesprochen.

Es ist auch bekannt, zur Aussonderung drehende Räder zu verwenden, die auch als Kickerräder bezeichnet werden. Es sind solche Kickerräder bekannt, die in rückstauender Anordnung arbeiten. Die Drehachse solcher Räder verläuft parallel und in einem Höhenabstand oberhalb der Ebene, die von den beiden Drehachsen der Förderrollen des Rollensortierers aufgespannt wird. Die Drehrichtung ist dabei so gewählt, dass sich die rotierenden Schaufeln des Rades entgegen der Förderrichtung der Vorformlinge bewegen. Ein Vorformling, der über eine vorgegebene Höhe hinausragt, wird von einer Schaufel des Schaufelrades erfasst, gegen die Förderrichtung und gegen die nachdrängenden Vorformlinge herausgezogen und ausgeworfen. Es wird als nachteilig angesehen, dass sich dadurch große Lücken im Fluss der Vorformlinge ergeben. Eine Ausschleusung durch ein Kickerrad im Zusammenspiel mit einer Abdrängeinrichtung zeigt die EP 2 554 356 A1.

Die nachveröffentlichte DE 10 2011 016 858 A1 zeigt zusätzlich zu einem solchen Kickerrad und in Förderrichtung der Vorformlinge dahinter angeordneten Kontrollkörper in Form eines um eine Achse drehbaren Kontrollrades. Dieses Kontrollrad blockiert bei Vorhandensein eines fehlausgerichteten Vorformlings.

Eine alternative Konstruktion zeigt z.B. die DE 601 18 772 T2, die oberhalb der Förderrollen eines Rollensortierers angeordnete Kickerräder zeigt. In einem ersten Beispiel liegt die Drehachse des Kickerrades parallel und in einem Höhenabstand zu der Ebene, die von den beiden Förderrollen des Rollensortierers aufgespannt wird, wobei die Drehachse schräg zu dessen Förderrichtung steht. Bei Erfassung eines Vorformlings wirkt aufgrund der Schrägstellung des Kickerrades gleichzeitig eine seitliche und eine rückstauende Auswurfkraft. Es wird noch immer als nachteilig angesehen, dass es deshalb zu Lückenbildung im Vorformlingsfluss kommt.

In einem zweiten Beispiel, das die DE 601 18 772 T2 zeigt, liegt die Drehachse des Kickerrades parallel und in einem Höhenabstand zu der Ebene, die von den beiden Drehachsen der Förderrollen des Rollensortierers aufgespannt wird, wobei die Drehachse des Kickerrades nunmehr parallel zur Förderrichtung steht. Bei Erfassung eines Vorformlings wird nur noch eine seitliche Auswurfkraft aufgebracht. Bei dieser Konstruktion wird als nachteilig angesehen, dass die Schaufeln des Kickerrades nur zu einem geringen Grad zwischen die Förderrollen eintauchen können, und dass keine Höhenanpassung möglich ist.

Es ist im Stand der Technik auch bekannt, dass die zwischen den Förderrollen hängenden Vorformlinge über ein Sensorsystem oder ein Kamerasystem beobachtet, fehlausgerichtete Vorformlinge erkannt und diese fehlausgerichteten Vorformlinge über einen Luftstoß und/oder mechanische Auswerfer ausgestoßen werden.

Alle oben beschriebenen Konstruktionen weisen zudem den Nachteil auf, dass fehlausgerichtete Vorformlinge aus dem Vorformlingsfluss aussortiert werden, wodurch sich der Durchsatz an Vorformlingen insbesondere bei Hochleistungsmaschinen erheblich reduzieren kann.

Es ist daher eine Aufgabe der vorliegenden Erfindung, hier Abhilfe zu schaffen. Die verbesserte Vereinzelungsvorrichtung für Vorformlinge weist dazu eine Ausrichteinrichtung zur Behandlung von fehlausgerichteten Vorformlingen auf, welche die Lage fehlausgerichteter Vorformlinge in eine hängende Ausrichtung korrigiert, so dass die Vereinzelungsvorrichtung insbesondere für einen hohen Durchsatz geeignet ist, wie es für die Versorgung einer Hochleistungsblasmaschine mit Vorformlingen erforderlich ist.

Gelöst wird die Aufgabe durch eine Vorrichtung mit den Merkmalen des Anspruchs 1.

Die erfindungsgemäße Vereinzelungsvorrichtung für Vorformlinge weist zur Behandlung von fehlausgerichteten Vorformlingen eine Ausrichteinrichtung auf, wobei die Vereinzelungsvorrichtung als Rollensortierer ausgebildet ist mit zwei sich gegensinnig zueinander drehenden Förderrollen, zwischen denen Vorformlinge in einer Sollausrichtung hängend in eine Förderrichtung transportiert werden. Die Ausrichteinrichtung weist einen um eine Achse drehbar gelagerten Rotationskörper auf, der derart oberhalb des Rollensortierers angeordnet ist, dass der drehende Rotationskörper in die Bewegungsbahn fehlausgerichteter Vorformlinge hineinragt, wobei der Rotationskörper zur Ausübung einer Ausrichtkraft auf fehlausgerichtete Vorformling ausgebildet ist. Anders als im Stand der Technik ragt der drehende Rotationskörper auch in die Bewegungsbahn der Vorformlinge in Sollausrichtung hinein. Dabei ist er so ausgebildet, dass er eine Ausrichtkraft auf fehlausgerichtete Vorformlinge ausübt, während korrekt ausgerichtete Vorformlinge in der korrekten Ausrichtung belassen werden.

Die vorliegende Erfindung bietet den Vorteil, dass durch eine geeignete Anordnung eines Rotationskörpers in einfacher Weise eine Ausrichtung eines fehlausgerichteten Vorformlings erreicht wird, ohne dass durch den Rotationskörper der Bewegungsablauf der Vorformlinge gestört wird. Der Rotationskörper wirkt nur auf fehlausgerichtete Vorformlinge ausrichtungskorrigierend ein.

Der Rotationskörper ist ein weiten Grenzen von seiner Form her frei wählbar. Es wäre z.B. denkbar, dass der Rotationskörper von unten in die Bewegungsbahn der Vorformlinge eingreift. Bevorzugt ist aber ein Eingreifen von oben. Gemäß einer weiteren vorteilhaften Ausgestaltung der Erfindung ist der Rotationskörper sternförmig ausgebildet mit sich radial nach außen bis in die Bewegungsbahn der Vorformlinge erstreckenden Fingern. Durch die sternenförmige Ausbildung kann auf vorteilhafte Weise die Ausrichtkraft auf die fehlausgerichteten Vorformlinge ausgeübt werden. Dies erfolgt besonders vorteilhaft von oben.

Gemäß einer weiteren vorteilhaften Ausgestaltung der Erfindung sind die Finger umfangsbeabstandet am Rotationskörper angeordnet, weiter bevorzugt äquidistant, wobei der äußere Umfangsabstand zwischen benachbarten Fingern bevorzugt im wesentlichen dem Abstand der Mitten zweier auf Stoß zwischen den Förderrollen in Sollausrichtung hängender Vorformlinge entspricht. Diese Ausgestaltung bietet den Vorteil, dass auf diese Weise jeder Vorformling zuverlässig in Eingriff mit den Fingern kommt. Vorstellbar wäre aber auch, die Finger enger anzuordnen, so dass sie teilweise zwischen benachbarte Vorformlinge greifen oder mehrfach an einen Vorformling angreifen..

Vorteilhaft ist der Rotationskörper gemäß einer weiteren Ausgestaltung der Erfindung so angeordnet, dass der Rotationskörper mittig zwischen den beiden Förderrollen in die Bewegungsbahn der Vorformlinge eingreift. Er kann dadurch bis zwischen die Förderrollen hineinreichen und bedarfsweise bis unterhalb der Auflageebene der Vorformlingkragen.

Eine weitere vorteilhafte Ausgestaltung der Erfindung sieht vor, dass die Drehachse des Rotationskörpers parallel zu der Ebene verläuft, die von den Drehachsen der Förderrollen aufgespannt wird. Weiterhin ist vorteilhaft, dass die Drehachse des Rotationskörpers im wesentlichen senkrecht zur Förderrichtung der Vorformlinge steht, und die Drehrichtung des Rotationskörpers der Förderrichtung entspricht. Die Bewegungsrichtung der Finger bei Eingriff in den Vorformlingsstrom ist dann gleich der Bewegungsrichtung der Vorformlinge. Ein Rückstau wird vermieden.

Erfindungsgemäß soll die Ausrichteinrichtung die korrekt ausgerichteten Vorformlinge nicht beeinflussen, sehr wohl aber die fehlausgerichteten Vorformlinge. Die Finger des Sterns könnten z.B. in die Zwischenräume zwischen Vorformlingen eingreifen. Besonders vorteilhaft ist es gemäß einer weiteren Ausgestaltung der Erfindung aber, dass der Rotationskörper bei Vorformlingen in Sollausrichtung in deren Mündungsöffnung eingreift.

Der Rotationskörper könnte z.B. einen Eigenantrieb aufweisen. Um keine Störung des Vorformlingsstroms zu bewirken sollte in einem solchen Fall die Drehung des Rotationskörpers mit der Bewegung der Vorformlinge synchronisiert werden. Dies kann insbesondere dann erhebliche Probleme bereiten, wenn der Vorformlingsstrom nicht kontinuierlich verläuft, sondern teilweise stockt oder zumindest in der Geschwindigkeit variiert. Gemäß einer weiteren Ausgestaltung der Erfindung ist der Rotationskörper ohne Eigenantrieb ausgebildet und ragt so in die Bewegungsbahn der Vorformlinge hinein, dass der Vorformlingsstrom den Rotationskörper in Drehung versetzt. Die Notwendigkeit einer Synchronisierung der Bewegungen entfällt dadurch völlig. Die sich bewegenden Vorformlinge treiben z.B. den Stern mit den Fingern an, indem sie ihn in Drehung versetzen.

Gemäß weiterer vorteilhafter Ausgestaltungen der Erfindung ist die Ausrichteinrichtung relativ zum Rollenförderer höhenverstellbar und insbesondere höhenverschwenkbar ausgebildet. Es kann so eine Anpassung vorgenommen werden, um das Ausrichtergebnis zu optimieren. Der Rotationskörper kann ein gewisses federbelastetes Höhenspiel aufweisen.

Eine Höhenverstellbarkeit der Ausrichteinrichtung ist auch deshalb vorteilhaft, weil es bei ungünstiger Lage eines Vorformlings dazu kommen kann, dass ein Vorformling eingeklemmt wird. Dies betrifft sowohl korrekt als auch falsch ausgerichtete Vorformlinge. Dieses Problem kann behoben werden durch einen kurzen Hub der Ausrichteinrichtung relativ zum Rollenförderer, so dass der verklemmte Vorformling passieren kann. Der Relativhub wird bevorzugt von der Ausrichteinrichtung ausgeführt, die dazu eine Hubeinrichtung aufweist, die z.B. für einen kurzzeitigen Hub sorgt und anschließend die Ausrichteinrichtung in die Ausgangsposition zurückkehren lässt. Die Hubbewegung kann z.B. ausgelöst werden nach messtechnischer Erfassung, dass der Vorformlingsstrom unterbrochen ist oder die Ausrichteinrichtung nicht mehr dreht.

Im Folgenden wird die Erfindung anhand mehrerer in den Figuren gezeigter Ausführungsbeispiele näher erläutert. Es zeigen:
- Fig. 1: eine Vorrichtung zum Transport von Vorformlingen zu einer Blasmaschine für die Herstellung von Behältern aus einem thermoplastischen Material,
- Fig. 2: eine schematische Teildraufsicht auf ein Ausführungsbeispiel einer erfindungsgemäßen Vereinzelungsvorrichtung mit einer Ausrichteinrichtung,
- Fig. 3 - 5: einen Ausrichtvorgang für einen ersten fehlausgerichteten Vorformling,
- Fig. 6 - 8: einen Ausrichtvorgang für einen zweiten fehlausgerichteten Vorformling, und
- Fig. 9, 10: .Ansichten zu einem eingeklemmten Vorformling vor und nach einer Hubbewegung der Ausrichteinrichtung.

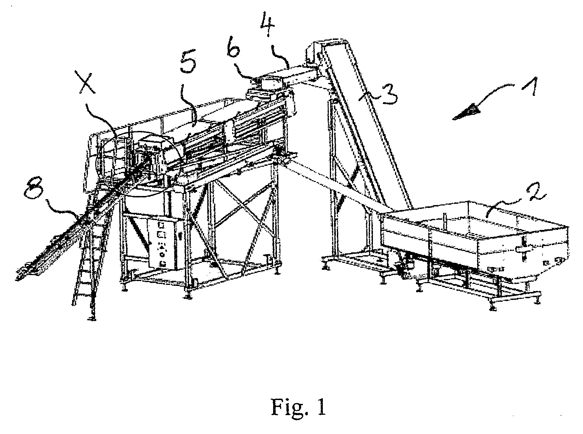

Die Fig. 1 zeigt eine Vorrichtung 1 zum Transport von Vorformlingen z.B. zu einer Blasmaschine für die Herstellung von PET-Flaschen. Die Vorrichtung besteht aus einem Sammelbehälter 2, in dem ein Vorformlingsvorrat bereitgestellt ist. Von dem Sammelbehälter 2 werden die Vorformlinge über einen Steigförderer 3 zu einem Eingabeende einer Fördereinrichtung 4 transportiert. Die Fördereinrichtung 4 ist mit ihrem anderen Ende, dem Abgabeende, oberhalb einer Vereinzelungsvorrichtung 5 angeordnet, wobei zur geordneten und möglichst störungsfreien Übergabe der Vorformlinge von der Fördereinrichtung 4 an die Vereinzelungsvorrichtung 5 eine dazwischen angeordnete Zuführeinrichtung 6 vorgesehen ist. Von der Vereinzelungsvorrichtung 5 gelangen die Vorformlinge sortiert in eine Ablauffördereinrichtung 8, über die die Vorformlinge in die Blasmaschine (nicht dargestellt) gefördert werden.

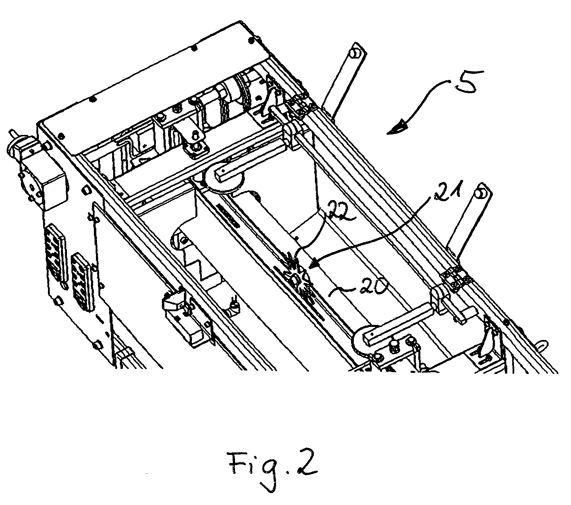

In der Fig. 2 ist eine Teildraufsicht auf eine Vereinzelungsvorrichtung 5 dargestellt, wobei die Vereinzelungsvorrichtung 5 als Rollensortierer ausgebildet ist mit zwei sich gegensinnig zueinander drehenden Förderrollen 20 (wobei bei dem dargestellten Ausführungsbeispiel nur eine Förderrolle sichtbar ist, während die zweiter Förderrolle von einer Abdeckung verdeckt ist), zwischen denen Vorformlinge in einer Sollausrichtung hängend in eine Förderrichtung X transportiert werden. Oberhalb der Förderollen 20 ist eine Ausrichteinrichtung 21 mit einem sternförmigen Rotationskörper 22 angeordnet.

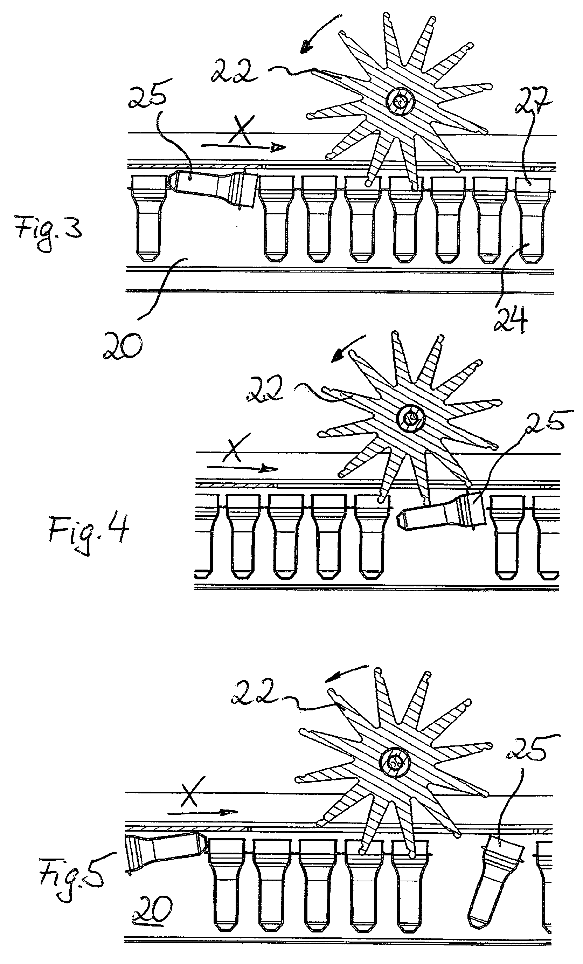

In den Fig. 3 - 5 sind hängend zwischen Förderrollen 20 transportierte Vorformlinge 24 gezeigt mit einem über den in Fig. 2 dargestellten sternförmigen Rotationskörper 22 ausgeführten Ausrichtvorgang für einen fehlausgerichteten Vorformling 25. Dazu ragt der Rotationskörper 22 in die Bewegungsbahn der Vorformlinge 25 hinein.

Zu Beginn des Ausrichtvorgangs (Fig. 3) greifen die Finger des sternförmigen Rotationskörpers 22 jeweils in die Öffnungen 27 von hängend ausgerichteten Vorformlingen hinein. Die Vorformlinge treiben den Stern 22 an, und die Abstände zwischen den freien Enden der Finger, sind so gewählt, dass er dem Mittenabstand benachbarter Vorformlinge entspricht. Je nach Radius des Sterns wäre eine geeignete Fingerzahl zu wählen. Wie weiterhin in Figur 3 zu erkennen ist einer der Vorformlinge 25 fehlausgerichtet ist, d. h. er hängt nicht zwischen den Förderrollen 20, sondern er liegt oben auf den Förderrollen 20 auf. Eine Übergabe an die nachgeschaltete Fördervorrichtung wäre nicht möglich, eine Störung zu befürchten.

In der Fig. 4 hat der inzwischen in Bewegungsrichtung X des Vorformlingsstroms vorangeschrittene fehlausgerichtete Vorformling 25 den Rotationskörper 22 erreicht. Anders als bei den wohlausgerichteten Vorformlingen können die Finger des sternenförmig ausgebildeten Rotationskörpers nicht in die Vorformlingsöffnung 27 eingreifen, sondern die Finger drücken auf die Seitenwand des liegenden Vorformlings 25 und üben dadurch eine Ausrichtkraft auf den fehlausgerichteten Vorformling 25 aus. Der Vorformling 25 richtet sich daher wie in Fig. 5 dargestellt in die gewünschte hängende Position aus.

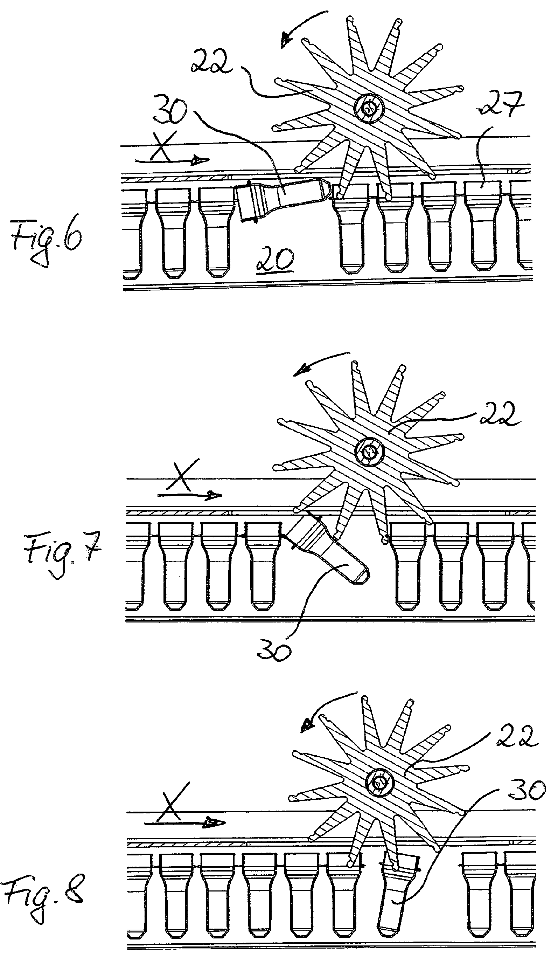

Ein ähnlicher, zweiter Ausrichtvorgang ist in den Fig. 6 - 8 dargestellt, wobei der fehlausgerichtete Vorformling 30 bei diesem Beispiel mit seiner Öffnung 27 entgegen der Förderrichtung X ausgerichtet ist, anders als bei dem in den Fig. 3 - 5 dargestellten Beispiel.

Auch bei diesem zweiten Beispiel greifen die Finger des sternförmigen Rotationskörpers 22 zu Beginn des Ausrichtvorgangs (Fig. 6) jeweils in die Öffnungen 27 von hängend ausgerichteten Vorformlingen 25 ein. In der Fig. 7 hat der fehlausgerichtete Vorformling 30 den Rotationskörper 22 erreicht und durch die Finger des sternenförmig ausgebildeten Rotationskörpers 22 wird wiederum eine Ausrichtkraft auf den fehlausgerichteten Vorformling 30 ausgeübt, so dass sich der Vorformling 30 wie in Fig. 8 dargestellt in die hängende Position ausrichtet.

In Bewegungsrichtung X der Vorformlinge hinter der erfindungsgemäßen Ausrichteinrichtung 21 kann noch ein Kickerrad oder eine andere Einrichtung zum Austragen noch immer fehlausgerichteter Vorformlinge vorgesehen sein, wie sie Eingang zum Stand der Technik gehörend diskutiert wurden.

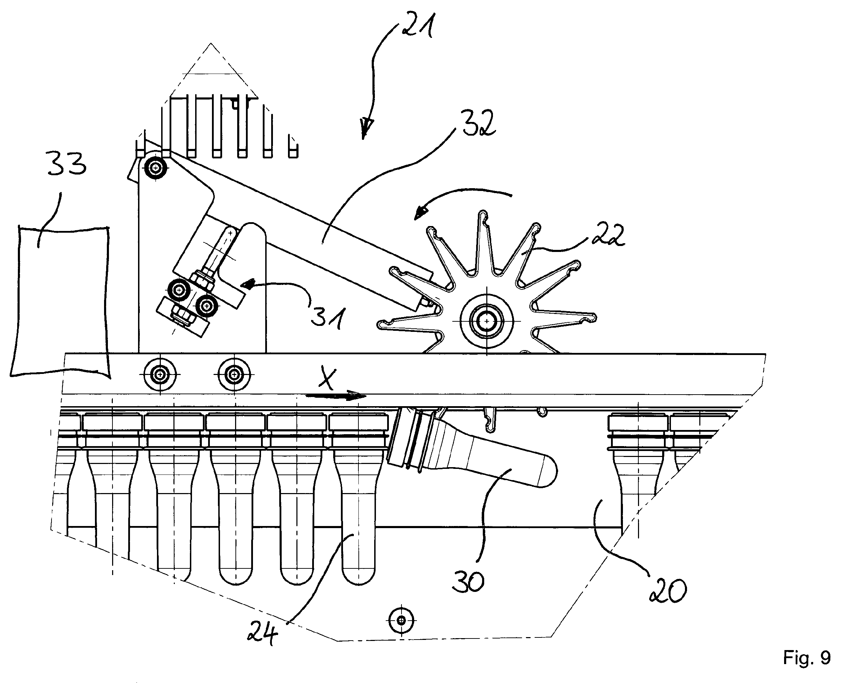

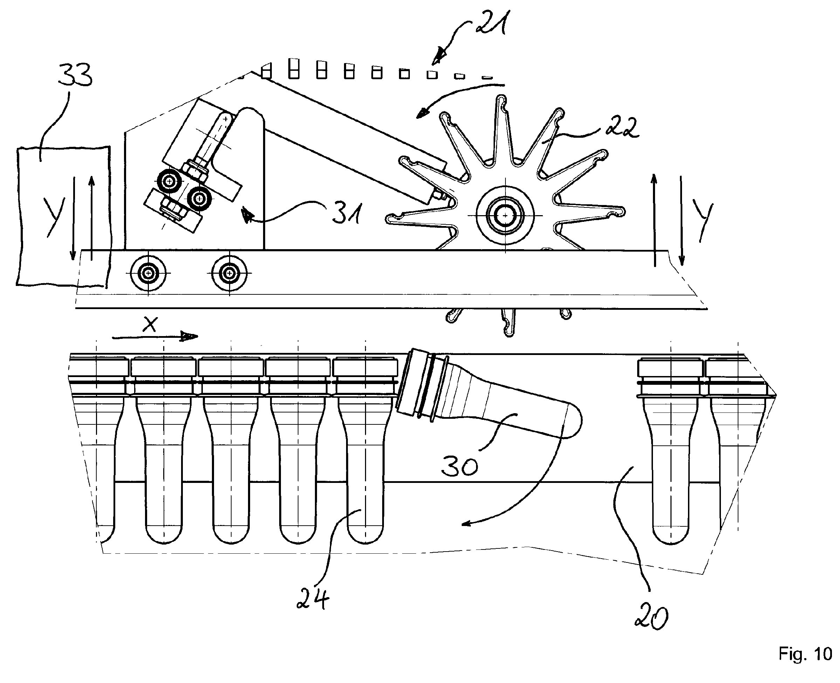

Unter ungünstigen Bedingungen kann es dazu kommen, dass der Rotationskörper 22 derart auf einen Vorformling auftrifft, dass es zu einem Verklemmen kommt. Diese Situation ist in den Figuren 9 und 10 dargestellt. Der Vorformling 30 wird in Figur 9 von den Fingern des Rotationskörpers 22 erfasst. Die von den Fingern ausgeübte Ausrichtkraft kann im vorliegenden Fall nicht wie geplant zur Ausrichtung des fehlausgerichteten Vorformlings 30 führen, vielmehr wird der Vorformling 30 lediglich gegen die drehenden Rollen 20 des Rollensortierers 5 gedrückt. Eine Unterbrechung des Vorformlingsstromes und ein Rückstau ist die Folge.

Zur Behebung dieses Rückstaus ist der Rotationskörper 22 relativ zu den Förderrollen 20 anhebbar. Eine Hubeinrichtung 33 sorgt in Y-Richtung für einen Relativhub zwischen Rollenförderer 5 und Ausrichteinrichtung 21, sodass die Finger des Rotationskörpers 22 den Vorformling 30 freigeben und dieser weiterlaufen kann. Da der Vorformling 30 sich nunmehr frei bewegen kann und insbesondere keine benachbarten Vorformlinge 24 mehr hat, kann er sich zwischen die drehenden Rollen 20 einsortieren und den vorausgelaufenen Vorformlingen nachrutschen.

In den Figuren 9 und 10 ist auch erkennbar, dass der Rotationskörper 22 an einem Schwenkarm 32 drehgelagert angeordnet ist. Der Schwenkarm ist in seiner Neigung einstellbar und dadurch höhenpositionierbar. Diese Positionierung erfolgt mit Hilfe einer Stelleinrichtung 31.

## Patentansprüche

1. Vereinzelungsvorrichtung (5) für Vorformlinge (24) mit einer Ausrichteinrichtung (21) zur Behandlung von fehlausgerichteten Vorformlingen (25, 30), wobei die Vereinzelungsvorrichtung (5) als Rollensortierer ausgebildet ist mit zwei sich gegensinnig zueinander drehenden Förderrollen (20), zwischen denen Vorformlinge (24) in einer Sollausrichtung hängend in eine Förderrichtung (X) transportiert werden, wobei die Ausrichteinrichtung (21) einen um eine Achse drehbar gelagerten Rotationskörper (22) aufweist, der derart oberhalb des Rollensortierers angeordnet ist, dass der drehende Rotationskörper (22) in die Bewegungsbahn fehlausgerichteter Vorformlinge (25, 30) hineinragt, wobei der Rotationskörper (22) zur Ausübung einer Ausrichtkraft auf fehlausgerichtete Vorformlinge (25, 30) ausgebildet ist, **dadurch gekennzeichnet, dass** der Rotationskörper (22) auch in die Bewegungsbahn der zwischen den Förderrollen in Sollausrichtung hängenden Vorformlinge (24) hineinragt und so ausgebildet und angeordnet ist, dass er eine Ausrichtkraft nur auf fehlausgerichtete Vorformlinge (25, 30) ausübt.

2. Vereinzelungsvorrichtung nach Anspruch 1, **dadurch gekennzeichnet, dass** der Rotationskörper (22) sternförmig ausgebildet ist mit sich radial nach außen bis in die Bewegungsbahn der Vorformlinge (24) erstreckenden Fingern.

3. Vereinzelungsvorrichtung nach Anspruch 2, **dadurch gekennzeichnet, dass** die Finger umfangsbeabstandet am Rotationskörper (22) angeordnet sind, wobei der äußere Umfangsabstand zwischen den freien Enden benachbarter Finger im wesentlichen dem Abstand der Mitten zweier auf Stoß zwischen den Förderrollen (20) in Sollausrichtung hängender Vorformlinge (24) entspricht.

4. Vereinzelungsvorrichtung nach einem der Ansprüche 1 bis 3, **dadurch gekennzeichnet, dass** der Rotationskörper (22) mittig zwischen den beiden Förderrollen (20) in die Bewegungsbahn der Vorformlinge (24) eingreift.

5. Vereinzelungsvorrichtung nach einem der Ansprüche 1 bis 4, **dadurch gekennzeichnet, dass** die Drehachse des Rotationskörpers (22) parallel zu der Ebene verläuft, die von den Drehachsen der Förderrollen (20) aufgespannt wird.

6. Vereinzelungsvorrichtung nach einem der Ansprüche 1 bis 5, **dadurch gekennzeichnet, dass** der Rotationskörper (22) bei Vorformlingen (24) in Sollausrichtung in deren Mündungsöffnung (27) eingreift.

7. Vereinzelungsvorrichtung nach einem der Ansprüche 1 bis 6, **dadurch gekennzeichnet, dass** der Rotationskörper (22) ohne Eigenantrieb ausgebildet ist, und so in die Bewegungsbahn der Vorformlinge (24) hineinragt, dass der Vorformlingsstrom den Rotationskörper (22) in Drehung versetzt.

8. Vereinzelungsvorrichtung nach einem der Ansprüche 1 bis 7, **dadurch gekennzeichnet, dass** die Ausrichteinrichtung (21) relativ zum Rollenförderer höhenverstellbar ausgebildet ist.

9. Vereinzelungsvorrichtung nach dem vorhergehenden Anspruch, **dadurch gekennzeichnet, dass** die Ausrichteinrichtung (21) höhenverschwenkbar ausgebildet ist.

10. Vereinzelungsvorrichtung nach einem der vorhergehenden Ansprüche, **dadurch gekennzeichnet, dass** der Rotationskörper (22) federbelastet ein Höhenspiel aufweist.

11. Vereinzelungsvorrichtung nach einem der vorhergehenden Ansprüche, **dadurch gekennzeichnet, dass** die Ausrichteinrichtung (21) eine Hubeinrichtung (33) zur Ausführung eines Relativhubes zwischen dem Rotationskörper (22) und den Förderrollen (20) aufweist.

## Claims

1. Separator device (5) for preforms (24) comprising an alignment device (21) for handling incorrectly aligned preforms (25, 30), wherein the separator device (5) is designed as roller sorter comprising two conveyor rollers (20) rotating in opposite directions to one another, between which preforms (24) are transported in a conveying direction (X) in a suspended manner in a target alignment, wherein the alignment device (21) has a rotating body (22), which is mounted rotatably about an axis and which is arranged above the roller sorter in such a manner that the rotating rotating body (22) projects into the movement path of incorrectly aligned preforms (25, 30), wherein the rotating body (22) is designed to exert an alignment force on incorrectly aligned preforms (25, 30), **characterised in that**
the rotating body (22) also projects into the movement path of the preforms (24) suspended between the conveyor rollers (20) in target alignment and is designed and arranged in such a manner that it exerts an alignment force only on incorrectly aligned preforms (25, 30).

2. Separator device according to Claim 1, **characterised in that** the rotating body (22) is designed in a star-shaped manner comprising fingers extending radially outwards into the movement path of the preforms (24).

3. Separator device according to Claim 2, **characterised in that** the fingers are arranged on the rotating body (22) at a circumferential distance, wherein the outer circumferential distance between the free ends of adjacent fingers corresponds substantially to the distance of the centres of two performs (24) suspended edge to edge in target alignment between the conveyor rollers (20).

4. Separator device according to any one of Claims 1 to 3, **characterised in that** the rotating body (22) engages in the movement path of the preforms (24) in the centre between the two conveyor rollers (20).

5. Separator device according to any one of Claims 1 to 4, **characterised in that** the axis of rotation of the rotating body (22) runs parallel to the plane, which is spanned by the axes of rotation of the conveyor rollers (20).

6. Separator device according to any one of Claims 1 to 5, **characterised in that**, with preforms (24) in target alignment, the rotating body (22) engages with the opening (27) thereof.

7. Separator device according to any one of Claims 1 to 6, **characterised in that** the rotating body (22) is designed without self-propulsion, and projects into the movement path of the preforms (24) in such a manner that the perform flow rotates the rotating body (22).

8. Separator device according to any one of Claims 1 to 7, **characterised in that** the alignment device (21) is designed so as to be height-adjustable relative to the roller conveyor.

9. Separator device according to any one of the preceding Claims, **characterised in that** the alignment device (21) is designed so as to be height-adjustable.

10. Separator device according to any one of the preceding Claims, **characterised in that** the rotating body (22) has a vertical play in a spring-loaded manner.

11. Separator device according to any one of the preceding Claims, **characterised in that** the alignment device (21) has a lifting device (33) for carrying out a relative lift between the rotating body (22) and the conveyor rollers (20).

## Revendications

1. Dispositif de séparation (5) de préformes (24) doté d'un dispositif de redressement (21) permettant d'agir sur des préformes (25, 30) mal orientées, le dispositif de séparation (5) étant réalisé sous forme de trieur à galets avec deux galets de transport (20) tournant en sens contraire l'un de l'autre et entre lesquels des préformes (24) suspendues selon une orientation de consigne sont transportées selon une direction de transport (X), le dispositif de redressement (21) présentant une pièce rotative (22) logée de façon à pouvoir tourner autour d'un axe et agencée au-dessus du trieur à galets de façon telle que cette pièce (22) en rotation pénètre dans le parcours des préformes mal orientées (25, 30), la pièce rotative (22) étant façonnée pour exercer une force de redressement sur des préformes mal orientées (25, 30), **caractérisé en ce que** la pièce rotative (22) pénètre également dans le parcours des préformes (24) suspendues entre les galets de transport selon une orientation de consigne et est façonnée et agencée de façon à n'exercer une force de redressement que sur des préformes mal orientées (25, 30).

2. Dispositif de séparation selon la revendication 1, **caractérisé en ce que** la pièce rotative (22) est façonnée en forme d'étoile dotée de doigts s'étendant radialement vers l'extérieur jusque dans le parcours des préformes (24).

3. Dispositif de séparation selon la revendication 2, **caractérisé en ce que** les doigts sont agencés avec un certain espacement à la périphérie de la pièce rotative (22), l'écartement circonférentiel entre les extrémités libres des doigts voisins correspondant essentiellement à l'écartement entre les centres de deux préformes (24) contiguës suspendues selon une orientation de consigne entre les galets de transport (20).

4. Dispositif de séparation selon l'une des revendications 1 ou 3, **caractérisé en ce que** la pièce rotative (22) s'engage dans le parcours des préformes (24) au milieu entre les deux galets de transport (20).

5. Dispositif de séparation selon l'une des revendications 1 à 4, **caractérisé en ce que** l'axe de rotation de la pièce rotative (22) est parallèle au plan formé par les axes de rotation des galets de transport (20).

6. Dispositif de séparation selon l'une des revendications 1 à 5, **caractérisé en ce que** la pièce rotative (22) s'engage dans l'embouchure (27) des préformes (24) lorsque celles-ci sont agencées selon l'orientation de consigne.

7. Dispositif de séparation selon l'une des revendications 1 à 6, **caractérisé en ce que** la pièce rotative (22) n'est pas dotée d'un entraînement propre et s'engage dans le parcours des préformes (24) de façon telle que le flux des préformes met en rotation la pièce rotative (22).

8. Dispositif de séparation selon l'une des revendications 1 à 7, **caractérisé en ce que** le dispositif de redressement (21) est conçu de façon à être ajustable en hauteur par rapport au transporteur à galets.

9. Dispositif de séparation selon la revendication précédente, **caractérisé en ce que** le dispositif de redressement (21) est conçu de façon à pouvoir pivoter en hauteur.

10. Dispositif de séparation selon l'une des revendications précédentes, **caractérisé en ce que** la pièce rotative (22) présente un jeu vertical sous l'action d'un ressort.

11. Dispositif de séparation selon l'une des revendications précédentes, **caractérisé en ce que** le dispositif de redressement (21) présente un dispositif de levage (33) permettant une élévation relative entre la pièce rotative (22) et les galets de transport (20).
